# EUROPÄISCHE PATENTSCHRIFT

(11) **EP 1 776 253 B1**
(45) Veröffentlichungstag und Bekanntmachung des Hinweises auf die Patenterteilung: **21.07.2010**
(21) Anmeldenummer: 05777959.7
(22) Anmeldetag: 04.08.2005
(51) Int. Cl.: B60N 2/12

(54) **VORRICHTUNG FÜR EIN FAHRZEUG ZUR SELBSTTÄTIGEN ARRETIERUNG EINER KOMPONENTE, INSBESONDERE EIN FAHRZEUGSITZ, UND FAHRZEUGSITZ**
DEVICE FOR A VEHICLE FOR AUTOMATICALLY BLOCKING A COMPONENT, IN PARTICULAR A MOTOR VEHICLE SEAT, AND MOTOR VEHICLE SEAT
DISPOSITIF D'UN VEHICULE AUTOMOBILE DESTINE AU BLOCAGE AUTOMATIQUE D'UN COMPOSANT, NOTAMMENT D'UN SIEGE DE VEHICULE, ET SIEGE DE VEHICULE AUTOMOBILE

(30) Priorität: 06.08.2004 DE 102004038587
(43) Veröffentlichungstag der Anmeldung: 25.04.2007
(73) Patentinhaber: Johnson Controls GmbH, 51399 Burscheid (DE)
(72) Erfinder: SCHMALE, Uwe, 42499 Hückeswagen (DE)
(74) Vertreter: Wolff, Felix
(86) Internationale Anmeldenummer: PCT/EP2005/053848
(87) Internationale Veröffentlichungsnummer: WO 2006/032574

(56) Entgegenhaltungen:
- EP-A- 0 589 759
- EP-A- 0 683 066
- WO-A-95/19272
- GB-A- 2 255 903
- US-A1- 2004 140 704

## Beschreibung

Die Erfindung betrifft eine Vorrichtung für ein Fahrzeug zur selbsttätigen Arretierung einer Komponente, insbesondere eines Fahrzeugsitzes, gemäß dem Oberbegriff des Anspruchs 1 und einen Fahrzeugsitz.

Allgemein (beispielsweise aus der EP0589759 A1 und der WO 95/19272 A1) bekannte Fahrzeugsitze, die für einen leichteren Zugang zu den Rücksitzen zusätzlich zu einer Klappbewegung der Rückenlehnen nach vorne auch ein Verschieben des Sitzes nach vorne gestatten, sind mit einer Anschlagvonichtung versehen, welche das Wiederauffinden der Ausgangsposition gestattet, aus der heraus der Sitz nach vorne verschoben worden ist. Hierdurch ist es möglich, dass nach einem durch das Vorklappen des Sitzes erleichterten Einstieg in das Fahrzeug, beispielsweise für Passagiere der Rücksitze, wieder die früher eingestellte Position des Fahrzeugsitzes leicht und unkompliziert eingenommen werden kann. Bei allgemein bekannten Mechanismen dieser Art ist es nachteilig, dass eine Vielzahl von Teilen zur Realisierung des gewünschten Mechanismus benötigt werden, so dass solche bekannten Verstellmechanismen zum einen in der Produktion aufwendig und teuer sind und zu anderen während ihrer Lebensdauer anfällig für Störungen und sogar sicherheitskritisch sind. Beispielsweise wird bei allgemein bekannten Vorrichtungen dieser Art die Sitzverriegelung durch federbelastete Verriegelungseinrichtungen bewirkt, wobei die Federwirkung durchaus auch ausfallen kann, so dass eine ordnungsgemäße Verriegelung des Sitzes nicht oder nur unzureichend gewährleistet ist, was unter anderem zu Sicherheitsproblemen führt.

Aufgabe der vorliegenden Erfindung ist es daher, die Nachteile des bekannten Standes der Technik zu vermeiden und eine einfache, leichte, kostengünstig herstellbare, kostengünstig montierbare sowie über ihre Lebensdauer zuverlässige Vorrichtung für ein Fahrzeug zur selbsttätigen Arretierung einer Komponente, insbesondere einen Fahrzeugsitz, bereitzustellen.

Die Aufgabe wird erfindungsgemäß durch eine Vorrichtung für ein Fahrzeug zur gemäß patent anspruch 1. selbsttätigen Arretierung einer Komponente, gelöst, wobei die Einstellposition auf dem Einstellbereich der Komponente änderbar vorgesehen ist, wobei die selbsttätige Arretierung der Komponente mittels eines Getriebemechanismus und eines Arretierelements bewirkbar ist, wobei der Getriebemechanismus die Bewegung der Komponente aus Ihrer Einstellposition in Ihrer Funktionsposition und zurück mittels einer variablen Übersetzung auf das Arretierelement überträgt. Hierdurch wird in vorteilhafter Weise eine Zwangsführung des Arretierelementes bewirkt, so dass es nicht auf die Funktion von beispielsweise Rocksteilfedern oder dergleichen ankommt, wenn die Komponente, bzw. der Fahrzeugsitz, arretiert werden soll. Unter einer variablen Übersetzung im Sinne der vorliegenden Erfindung ist eine unterschiedlich starke Steuerbewegung des Arretierelements bei gleicher Bewegung des Getriebemechanismus in unterschiedlichen Einstellpositionen des Getriebemechanismus zu verstehen.

Bevorzugt ist, dass in der Nähe der Einstellposition der Komponente aufgrund der variablen Übersetzung eine vergleichsweise große Steuerbewegung des Arretierelements bewirkbar ist und dass die Steuerbewegung des Arretierelements ansonsten vergleichsweise klein ist. Hierdurch ist es erfindungsgemäß möglich, zum einen eine wirksame Arretierung der Komponente, insbesondere zur Anzeige der ursprünglich eingenommenen jedoch zur Einstellung einer Funktionsposition verlassenen Einstellposition zu bewirken. Weiterhin ist es dadurch möglich, einen vergleichsweise großen Einstellbereich der Komponente vorzusehen, ohne dass hierdurch ein großer Platzbedarf an der Vorrichtung, beispielsweise durch die während der Führung der Komponente über den Einstellbereich benötigten großen Zahnrädern oder anderer Bauteile, entsteht.

Erfindungsgemäß ist weiterhin, dass die variable Übersetzung mittels eines Taumelmechanismus bewirkt wird. Insbesondere ist vorgesehen, ein Hypozykloidengetriebe als Taumelmechanismus zu verwenden, bei dem ein Teil des Getriebes eine hypazykloide Bewegung durchführt. Hierdurch ist es in besonders einfacher, kompakter und stabiler Weise möglich, eine variable Übersetzung zu realisieren.

Weiterhin ist bevorzugt, dass das Arretierelement mit dem Getriebemechanismus mittels einer Bolzen-Kulissen-Verbindung gekoppelt ist. Die variable Übersetzung kann damit in besonders einfacher, wirkungsvoller und robuster Weise realisiert werden.

Ferner ist bevorzugt, dass die Komponente ein Fahrzeugsitz ist und dass dem Einstellbereich der Komponente eine Längsverschieblichkeit der Komponente, insbesondere in Richtung einer Fahrzeuglängsachse, entspricht. Hierdurch ist es erfindungsgemäß besonders vorteilhaft möglich, die Komponente als Fahrzeugsitz, insbesondere als Fahrzeugvordersitz auszulegen, so dass beispielsweise Passagiere zum Einstieg auf die Rücksitze des Fahrzeugs eine besonders hohe Bequemlichkeit erhalten.

Ein weiterer Gegenstand der vorliegenden Erfindung ist ein Fahrzeugsitz mit einer erfindungsgemäßen Vorrichtung. Dieser kann besonders einfach, robust und kostengünstig gestaltet werden und dennoch einen großen Funktionsumfang, wie beispielsweise die erfindungsgemäße Memory-Funktion zum Wiederauffinden bzw. Anzeigen einer zuvor eingestellten, jedoch zur Einstellung einer hiervon unterschiedlichen Funktionsposition verlassenen Einstellposition anzuzeigen.

Die Erfindung wird nachfolgend anhand von in der Zeichnung dargestellten Ausführungsbeispiele näher erläutert.
- **Figur 1 und 2**: zeigen perspektivische Ansichten einer an einem Fahrzeugsitz vorgesehenen erfindungsgemäßen Vorrichtung.
- **Figur 3**: zeigt eine Seitenansicht mit der erfindungsgemäßen Vorrichtung.
- **Figuren 4, 5 und 6**: zeigen jeweils eine Seitenansicht und eine Draufsicht mit der erfindungsgemäßen Vorrichtung.
- **Figuren 7, 7a , 8**: zeigen Prinzipdarstellungen zur Verdeutlichung der Funktionalität der erfindungsgemäßen Vorrichtung.

Die vorliegende Erfindung betrifft eine Vorrichtung zu selbsttätigen Arretierung einer Komponente, die insbesondere als Fahrzeugsitz vorgesehen ist. Nachfolgend wird die Erfindung am Beispiel eines Fahrzeugsitzes beschrieben, so dass die Begriffe Komponente und Fahrzeugsitz im Wesentlichen synonym gebraucht werden. Als Beispiel einer solchen erfindungsgemäßen Vorrichtung wird insbesondere ein Fahrzeugsitz mit einer Easy-Entry-Funktion angeführt. Diese Funktion bedeutet, dass eine Verstellung des Fahrzeugsitzes dann möglich ist, wenn der Zugang zu Passagieren beispielsweise zur Rücksitzbank oder aber zu hinter dem Fahrzeugsitz liegenden Sitzgelegenheiten eines Fahrzeugs erleichtert werden soll, beispielsweise für ein zweitüriges Fahrzeug. Zur Erleichterung des Zugangs zu einer hinteren Sitzreihe kann somit der Fahrzeugsitz bzw. der Vordersitz nach dem Vorklappen der Rückenlehne des Vordersitzes in den Sitzschienen so weit nach vorne geschoben werden, dass ein bequemes Einsteigen ermöglicht wird. Beim nachfolgenden Zurückschieben des Sitzes soll dieser in der Regel bis in die zuletzt eingestellte Längsposition zurückfahren. Hierzu ist die erfindungsgemäße Vorrichtung in der Art einer "Memory"-Einrichtung oder einer Gedächtniseinrichtung ausgerüstet, wobei sich die Gedächtniseinrichtung die zuvor eingestellte jedoch später verlassene Einstellposition "merkt" und bei einem Zurückschieben des Sitzes (bzw. allgemein der Komponente) diesen an der zuvor eingenommenen Einstellposition stoppt. Die Einstellposition wird im Folgenden auch als Memory-Position bezeichnet.

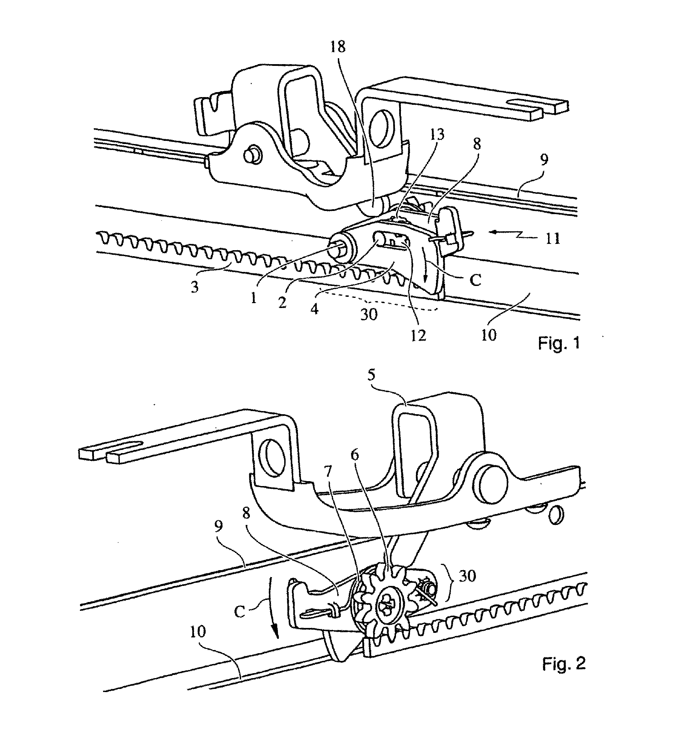

Es wird ein Zählwerk als Memory-Einrichtung eingesetzt, welches den Weg der Verschiebung des Fahrzeugsitzes aus der zu merkenden Einstellposition bzw. Memory-Position in beispielsweise die vorderste Stellung bzw. Funktionsposition, die im Folgenden auch als Easy-Entry-Position bezeichnet wird, misst. Beim Zurückschieben lässt sich der Sitz um genau die gleiche Wegstrecke zurückstellen, stoppt jedoch wieder bei der vorher eingestellten jedoch verlassenen Sitzposition, d. h. der Einstellposition. Der in den Figuren nicht eigens bezeichnete Sitz bzw. Fahrzeugsitz bzw. die im Ganzen nicht eigens bezeichnete Komponente ist beispielsweise über eine Sitzoberschiene 9 und eine Sitzunterschiene 10 sowie über eine nicht dargestellte manuell oder automatisch betätigbare Verriegelungseinrichtung in verschiedenen Längspositionen innerhalb des Fahrzeugs verriegelbar. In den Figuren 1 und 2 sind jeweils perspektivische Darstellungen mit der erfindungsgemäßen Vorrichtung abgebildet. Die Vorrichtung als solche wird in den Figuren mit dem Bezugszeichen 30 bezeichnet, wobei gleiche Bezugszeichen in unterschiedlichen Figuren gleiche Teile der Vorrichtung 30 oder der Komponente bezeichnen.

Neben der Oberschiene 9 und der Unterschiene 10 ist in den Figuren 1 und 2 ein Schwinghebel 18 zur Ansteuerung der Vorrichtung 30, eine Zahnstange 3, ein Taumelherz 2 , ein Lagerbolzen 1, eine Kulisse 12, ein Zählwerk 11, ein Gehäuse 8, eine Steuerfeder 7 und eine Innenverzahnung 13 dargestellt. Die Figur 1 zeigt die Vorrichtung 30 und die Komponente im Wesentlichen perspektivisch von einer Seite und die Figur 2 zeigt Vorrichtung 30 und die Komponente aus einem anderen Blickwinkel, im Wesentlichen die gegenüberliegende Seite darstellend. Ein Pfeil C deutet in der Figur 1 und in der Figur 2 die Bewegung der Vorrichtung 30 an, die zu einer Aktivierung der Komponente führt. Für das Beispiel eines Fahrzeugsitzes als Komponente wird durch das nicht dargestellte Vorklappen einer nicht dargestellten Rückenlehne das Gehäuse 8 um den Lagerbolzen 1 herum durch den mit der Rückenlehne in Wirkung stehenden Schwinghebel 18 nach unten geschwenkt, so dass ein Antriebsrad 6 in die Zahnstage 3 eingreift. Diese Bewegung ist durch den Pfeil C in den Figuren 1 und 2 angedeutet.

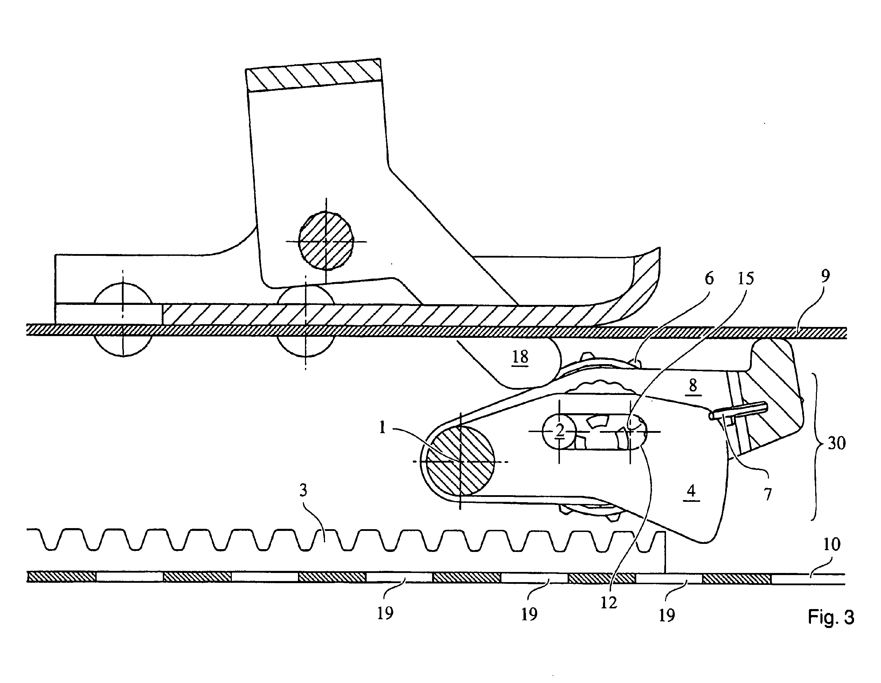

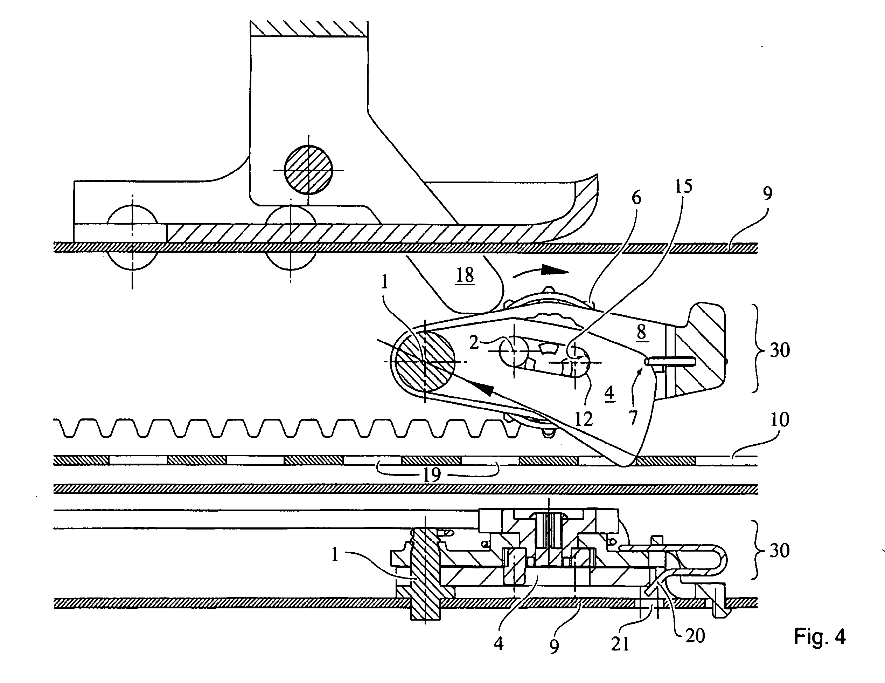

In der Figur 3 ist eine Seitenansicht der erfindungsgemäßen Vorrichtung 30 dargestellt. In den Figuren 4, 5, 6 ist jeweils eine Seitenansicht und eine Draufsicht der erfindungsgemäßen Vorrichtung 30 dargestellt. In Figur 3 ist die Vorrichtung 30 in ihrer Inaktivitätsposition eingestellt. Falls die (nicht dargestellte) manuell lösbare Verriegelungseinrichtung zur Längsverschiebung der Komponente bzw. des Fahrzeugsitzes entriegelt ist, kann der Sitz, d. h. die Oberschiene 9 relativ zur Unterschiene 10, frei bewegt werden und in einer Position, bei beispielweise einer von mehreren einstellbaren Rastpositionen, eingestellt werden. Schwach erkennbar, doch eingezeichnet ist in Figur 3 ein Taumelritzel 15, welches in der Vorrichtung 30 zur Steuerung vorgesehen ist. Weiterhin ist in Figur 3 eine Klinkenverzahnung 19 angedeutet, die bei Aktivierung der Vorrichtung 30 mit einem insbesondere als eine Klinke 4 vorgesehenen Arretierungelement 4 zusammenwirken kann.

In den Figuren 4, 5, 6 ist jeweils eine Seitenansicht mit einer erfindungsgemäßen Vorrichtung 30 sowie eine Draufsicht im unteren Teil der Figuren dargestellt.

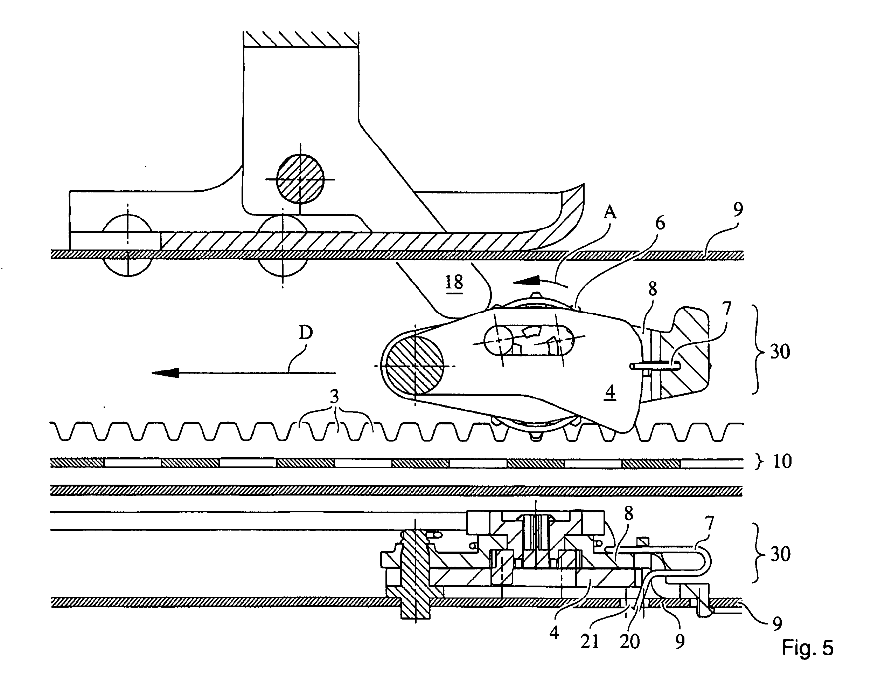

In Figur 4 ist die Vorrichtung 30 in ihrer durch den Schwenkhebel 18 aktivierten Einstellung dargestellt. Folglich ist die Vorrichtung 30 um den Lagerbolzen 1 in den Darstellungen nach unten verschwenkt, wobei das Gehäuse 8 der Vorrichtung 30 gegenüber der Klinke 4 der Vorrichtung 30 in einem derartigen Winkelverhältnis steht, dass das untere Ende der Klinke 4 in Eingriff mit der Klinkenverzahnung 19 an der Unterschiene 10 steht. Diese Einstellungen der Vorrichtung 30 ist gewissermaßen die Start- und die Zielposition zur Durchführung der erfindungsgemäßen Funktionsübernahme an der Komponente, im Beispiel insbesondere an einem Fahrzeugsitz. In der Figur 5 wird sichtbar, dass durch eine Verstellung der Komponente, d.h. eine Änderung der Einstellposition der Komponente in Richtung zur Funktionsposition der Komponente, beispielsweise einer Easy Entry Position eines Fahrzeugsitzes, sich das Winkelverhältnis zwischen der Klinke 4 und dem Gehäuse 8 der Vorrichtung 30 in einer erfindungsgemäßen und gesteuerten Weise ändert. Die Bewegung der Komponente bzw. des Sitzes ist in Figur 5 durch einen Pfeil D dargestellt, der die Bewegungsrichtung der Oberschiene 9 relativ zur Unterschiene 10 anzeigt, wobei die Vorrichtung 30 in Ihrer Aktivitätsposition eingestellt ist. Hierbei bewirkt die Drehung des Antriebsrades 6 entlang der Zahnstange 3, dass sich das Winkelverhältnis bzw. die Winkellage zwischen der Klinke 4 und dem Gehäuse 8 der Vorrichtung 30 ändert. Die Drehung des Antriebsrades 6 ist in der Figur 5 durch einen Pfeil A angegeben.

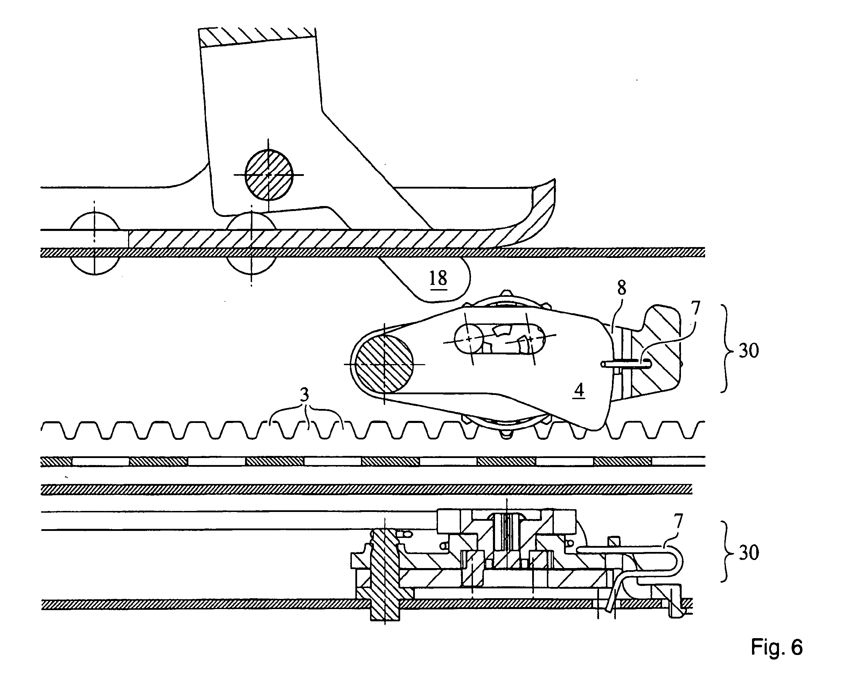

In der Figur 6 ist die Situation dargestellt, bei der der Schwenkhebel 18 nicht mehr die Vorrichtung 30 in Ihrer Aktivitätsposition hält. Dies ist beispielsweise dann der Fall, wenn ein Fahrzeugsitz zwar hinsichtlich seiner Längsverschiebung noch in seiner Easy Entry Position eingestellt ist, d. h. in der Regel nach vorne verschoben ist, jedoch hinsichtlich der Rückenlehneneinstellung des Sitzes bereits in seiner Normalposition eingestellt ist. In diesem Fall würde beispielsweise der mit der Rückenlehne verbundene Schwenkhebel 18 die Vorrichtung 30 nicht mehr in ihrer Aktivitätsposition halten können. Diese Aufgabe wird bei der erfindungsgemäßen Vorrichtung 30 durch ein Steuerelement 7 übernommen, welches insbesondere als Steuerfeder 7 vorgesehen ist. Dieses Steuerelement 7 kann jedoch auch als ein Steuerschieber ausgeführt sein.

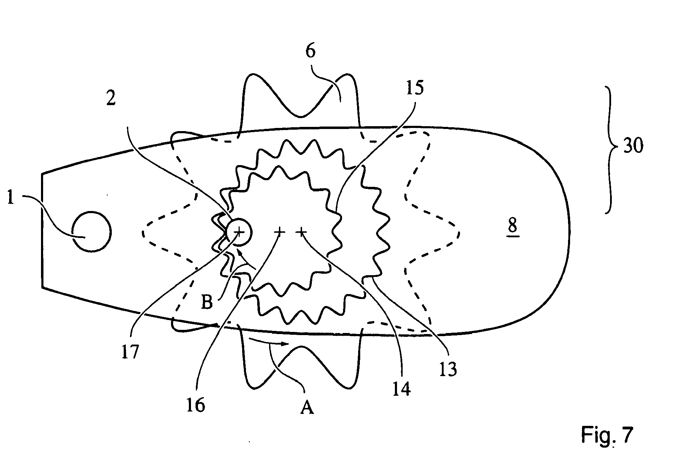

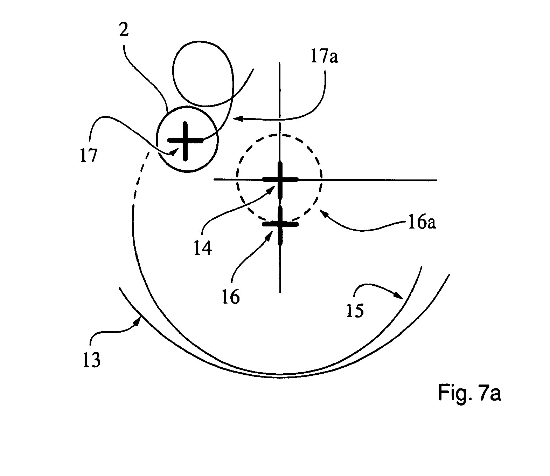

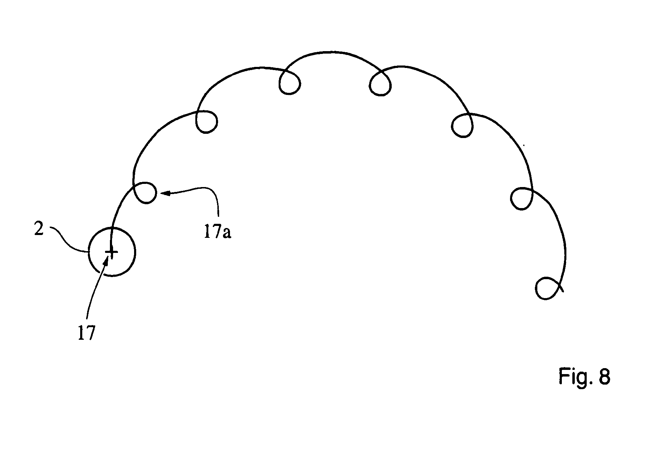

In den Figuren 7, 7a und 8 ist der Funktionsmechanismus der erfindungsgemäßen Vorrichtung 30 dargestellt. In Figur 7 ist das um den Lagerbolzen 1 schwenkbare Gehäuse 8 der erfindungsgemäßen Vorrichtung 30 dargestellt. Am Gehäuse 8 ist auf einer Seite das Antriebsrad 6 angeordnet, welches eine Außenverzahnung aufweist, die mit der Zahnstange 3 in Wirkverbindung treten kann. Die Vorrichtung 30 weist ebenfalls eine Innenverzahnung 13 auf, die insbesondere am Gehäuse 8 vorgesehen ist. Das Antriebsrad 6 ist konzentrisch mit der Innenverzahnung 13 um eine erste Drehachse 14 drehbar angeordnet. Exzentrisch zur ersten Drehachse 14 weist das Antriebsrad 6 eine Lagermöglichkeit für das Taumelritzel 15 auf, wobei das Taumelritzel 15 durch die Lagermöglichkeit um eine zweite Achse 16 ( exzentrisch zur ersten Achse 14) drehbar ist. Zusätzlich zu der Lagerung des Taumelritzels 15 um die zweite Achse 16 weist das Taumelritzel 15 eine nicht mit einem Bezugszeichen bezeichnete Außenverzahnung auf, die mit der Innenverzahnung 13 kämmt. Die Bewegung des Taumelritzels 15 ist damit vollständig durch die Drehstellung des Antriebsrades 6 bestimmt. Das Taumelritzel 15 weist, insbesondere einstückig verbunden, das Taumelherz 2 auf, welches seinerseits exzentrisch zur zweiten Drehachse 16 angeordnet ist. Das Taumelherz 2 ist insbesondere als Bolzen vorgesehen, der in der Kulisse 12 angeordnet ist. Der Bolzen 2 bzw. das Taumelherz 2 weist einen Mittelpunkt (bzw. eine Symmetrieachse) auf, der (bzw. die) im Folgenden auch als dritte Drehachse 17 bezeichnet wird. Es ist nun so, dass bei einer Drehung des Antriebsrades 6 in Richtung des Pfeils A in Figur 7 das Taumelritzel 15 eine Bewegung in Richtung des Pfeils B ausführt - zumindest relativ zur Innenverzahnung 13. Hierdurch führt die dritte Drehachse 17 eine spiralförmige Bewegung aus, die zum einen eine kreisförmige Bewegungskomponente entsprechend der Bewegung der zweiten Drehachse 16 um die erste Drehachse 14 umfasst und die darüber hinaus eine zweite Bewegungskomponente entsprechend dem Umlauf des Taumelherzens 2 bzw. der dritten Drehachse entlang der Innenverzahnung 13 (in der Bewegungsrichtung gemäß dem Pfeil B) durchführt. Die spiralenartige Bewegung der dritten Drehachse 17 bzw. des Taumelherzens 2 ist in Figur 7a und in Figur 8 andeutungsweise dargestellt und mit dem Bezugszeichen 17a bezeichnet. Bei dieser Bewegung handelt es sich insbesondere um eine hypozykloide Bewegung, die durch den erfindungsgemäßen, Taumelmechanismus hervorgerufen wird. In Figur 7a ist darüber hinaus noch die erste Drehachse 14, die zweite Drehachse 16, ein Bewegungskreis 16a, der die Bewegung der zweiten Drehachse 16 darstellt, das Taumelritzel 15, und die Innenverzahnung 13 dargestellt, wobei der Einfachheit halber weder die Verzahnung des Taumelritzels 14 noch die Innenverzahnung 13 explizit, d. h. die Zähne der jeweiligen Verzahnungen, dargestellt sind. Aufgrund der Anordnung der dritten Drehachse 17 relativ zum Lagerbolzen 1, um den die Klinke 4 drehbar ist, wird die Winkellage zwischen dem Gehäuse 8 und der in Figur 7 nicht dargestellten Klinke 4 aufgrund der Bewegung des Taumelherzens 2 durch eine Drehung des Antriebsrades 6 geändert, und zwar derart, dass die Klinke 4 angehoben wird und aus dem Eingriff in die Klinkenverzahnung 19 herauskommt. Durch eine Variation der Zähnezahl zwischen Innenverzahnung 13 und Außenverzahnung des Taumelritzels 15 ist es möglich, dass das Antriebsrad 6 eine Vielzahl von Drehungen durchläuft, ohne dass das Taumelherz 2 und damit die Klinke 4 wieder in eine Winkellage zum Gehäuse 8 gerät, die zu einem Eingriff der Klinke 4 in die Klinkenverzahnung 19 führt. Hierdurch ist es erfindungsgemäß möglich, dass der Einstellbereich der insbesondere als Längsverstellung vorgesehenen Einstellmöglichkeit der erfindungsgemäßen Komponente vergleichsweise groß gewählt werden kann, insbesondere dass weit mehr als zwei Umdrehungen von dem Antriebsrad 6 ausgeführt werden können. Hierdurch ist es möglich das Antriebsrad 6 vergleichsweise klein zu gestalten und damit die gesamte Vorrichtung vergleichsweise kompakt, leicht und kostengünstig zu gestalten.

Im normalen Gebrauch der Komponente bzw. des Sitzes ist die erfindungsgemäße Vorrichtung 30 nicht in Wirkverbindung mit der Zahnstange 3. Das bedeutet, dass der Schwenkhebel 18 bzw. ein bei einer anderen Ausformung der Komponente andersartig vorgesehenes Auslösemittel die Vorrichtung 30 deaktiviert belässt. Erfindungsgemäß ist die Vorrichtung 30 bei einer verstellbaren Komponente an einer Einstellvorrichtung der Komponente oder mit einer Einstellvorrichtung der Komponente verbunden, im vorliegenden Fall ist die Vorrichtung 30 mit der Oberschiene 9 der Sitzverstellung verbunden und am Lagerbolzen 1 schwenkbar befestigt. An der Vorrichtung 30, insbesondere am Gehäuse 8 der Vorrichtung 30, ist das außenverzahnte Antriebsrad 6 drehbar angeordnet, wobei selbstverständlich eine andere Verzahnung oder eine andere Wirkverbindung mit einem komplementären Teil der einstellbaren Komponente verbunden, im vorliegenden Fall ist das Antriebsrad 6 mit der an der Sitzunterschiene 10 befestigten Zahnstange 3 verbindbar. Im normalen Gebrauch des Sitzes wird das Gehäuse 8 mit dem Antriebsrad 6 durch die auf den Laberbolzen 1 bzw. auf die Drehung des Gehäuses 8 um den Lagerbolzen 1 wirkende Steuerfeder 7 so angehoben, dass die Vorrichtung 30 und damit das Antriebsrad 6 außerhalb des Eingriffs mit der Zahnstange 3 gehalten wird, vergleiche Figur 3. Das Antriebsrad 6 wirkt über das Taumelgetriebe als Getriebemechanismus auf das Taumelherz 2 ein, welches seinerseits mittels der Kulisse 12 die Klinke 4 zwangsbewegt. Der Getriebemechanismus umfasst insbesondere das Taumelgetriebe mit der Innenverzahnung 13, insbesondere im Gehäuse 8, die um die erste Drehachse 14 (des Antriebsrades 6) herum verläuft. Auf der Rückseite des Antriebsrades 6 ist das Taumelritzel 15 mit seiner zweiten Drehachse 16 angeordnet, insbesondere mit dem Antriebsrad 6 mittels einer Clipverbindung verbunden. Bei einer Drehung des Antriebsrades 6 führt das Taumelherz 2 eine kreisförmige Primärbewegung mit einer überlagerten schleifenförmigen Bewegung (Taumelbewegung) aus, vergleiche Figuren 7a und 8. Nach einer Aktivierung der Vorrichtung 30, beispielsweise durch die Wirkung des Schwenkhebels 18 bei einem Vorklappen der Rückenlehne eines Fahrzeugsitzes, greift sowohl die Verzahnung des Antriebsrades 6 in die Zahnstange 3 als auch die Klinke 4 in die Klinkenverzahnung 19 der Sitzunterschiene 10 ein und es wird im vorliegenden Beispiel eines Sitzes diese Schienenverriegelung (nicht dargestellt) gelöst. Hiernach kann der Sitz entlang der Ober- und Unterschiene 9, 10 nach vorne in seine Easy-Entry-Position geschoben werden, wodurch aufgrund der Drehung des Antriebsrades 6 die Klinke aus der Klinkenverzahnung 19 herausgehoben wird und mit der Oberschiene 9 entlang der Klinkenverzahnung 19 in die Easy-Entry-Position entlang des Pfeils D ( vergleiche Figur 5) verschoben wird. Da die Klinke 4 der Bewegung des Taumelherzens 2 folgt, wird die Klinke 4 zügig aus der Klinkenverzahnung 19 angehoben. Bedingt durch die variable Übersetzung des Getriebemechanismus ist es möglich, dass der Fahrzeugsitz nun ohne weiteren Kontakt zwischen der Klinke 4 und der Klinkenverzahnung 19 nach vorne verschoben wird. Das Ende 20 des Steuerelementes 7 bewirkt aufgrund der Position der Klinke 4 einen ständigen Eingriff zwischen dem Antriebsrad 6 und der Zahnstange 3 auch dann, wenn die Vorrichtung 30 nicht von dem Schwenkhebel 18 in Richtung eines Eingriffs zwischen Antriebsrad 6 und Zahnstange 3 gehalten wird, weil das Steuerelement 7 gemäß der Draufsicht in Figur 5 (vergleiche im Gegensatz zu der Darstellung in Figur 4) einen Eingriff in einer Ausnehmung 21 der Oberschiene 10 bewirkt. In der vorliegenden Ausführungsform ist als Steuerelement 7 als Teil der Steuerfeder 7 ausgebildet und zwar als deren Ende 20, welches in die Ausnehmung 21 der Oberschiene 9 eingreifen kann, wenn die Klinke 4 in Ihrer angehobenen Position eingestellt ist, d.h. nicht in Eingriff mit der Klinkenverzahnung 19 steht. Das Steuerelement 7 kann jedoch auch mittels eines Schiebers realisiert werden, welcher von der Stellung der Klinke 4 gesteuert wird. Im vorliegenden Beispiel ist also das ausragende Ende 20 der Steuerfeder 7 entweder von der Klinke 4 in eine Position gebracht, so dass das ausragende Ende 20 der Steuerfeder 7 in die seitliche Ausnehmung 21 der Sitzoberschiene 9 eingeführt wird. Damit wird jede weitere Schwenkbewegung zwischen dem Gehäuse 8 und der Sitzoberschiene 9 blockiert. Bei Zurückschieben des Sitzes mit vorgeklappter Rückenlehne wird die Klinke 4 beim Erreichen der Ausgangsposition bzw. der Memory-Position, die gleichzeitig der Einstellposition des Sitzes bzw. der Komponente im Gegensatz zu ihrer Funktionsposition entspricht, ebenso zügig (wie in beim Verlassen der Einstellposition) in die Klinkenverzahnung 19 zurückgeschwenkt und blockiert damit schlagartig die Längsverstellung bzw. Längsverschiebung des Sitzes bzw. allgemein der Komponente. Gleichzeitig wird das Steuerelement 7 bzw. das in die seitliche Ausnehmung 21 der Sitzoberschiene 9 eingreifende Ende 20 des Steuerelements 7 aus der seitlichen Ausnehmung 21 der Sitzoberschiene 9 herausverlagert, so dass sich beim nachfolgenden Hochklappen der Rückenlehne das Gehäuse 8 anheben kann und das Antriebsrad 6 außer Eingriff mit der Zahnstange 3 gerät. Hierdurch ist der Funktionszyklus der erfindungsgemäßen Vorrichtung 30 durchlaufen und die erfindungsgemäße Vorrichtung 30 nimmt wieder die Ausgangsposition oder Nullposition (vergleiche Figur 3) ein, bis durch ein erneutes Vorklappen der Rückenlehne aus einer möglicherweise anderen Längseinstellung des Fahrzeugsitzes erneut ein Durchlaufen des erfindungsgemäßen Funktionszyklusses der Vorrichtung ausgelöst wird. In der Umgebung der Einstellposition des Sitzes, d.h. wenn die Klinke 4 bzw. das Arretierelement 4 die Arretierung des Sitzes bewirkt oder löst, ist die Bewegung der Klinke 4 aufgrund eines bestimmten Verstellweges des Sitzes (beispielsweise 5 mm) und aufgrund einer diesem Verstellweg entsprechenden Bewegung des Getriebemechanismus erheblich größer als die Bewegung der Klinke 4 aufgrund einer Verstellung des Sitzes über den gleichen Verstellweg (z.B. 5 mm) etwa im Bereich der Funktionsposition des Sitzes. Diese unterschiedliche Wirkung eines gleichen Verstellweges (bzw. einer entsprechenden Bewegung des Getriebemechanismus) auf unterschiedliche Bewegungen der Klinke 4 in Abhängigkeit unterschiedlicher Einstellpositionen des Sitzes wird im Rahmen der vorliegenden Erfindung als variable Übersetzung zwischen dem Getriebemechanismus und dem Arretierelement bezeichnet. Falls der Sitz jedoch aus einer zwischen der Memory-Position und der Funktionsposition befindlichen Stellung mit hochgeklappter Rückenlehne (d. h. ohne Wirkung des Schwenkhebels 18 oder eines anderen Auslösemittels und mit manuell gelöster Verriegelungseinrichtung für die Sitzober- und Unterschiene 9, 10 nach hinten verschoben wird, schnellt das Gehäuse 8 mit samt der Klinke 4 unverzüglich nach oben, sobald das Steuerelement 7 bzw. sein in die Ausnehmung 21 der Oberschiene 9 eingreifendes Ende 20 die Ausnehmung 21 verlässt. Der Sitz kann daher ohne spürbare Verzögerung auch bis in eine Position hinter der Memory-Position, d. h. ausgehend von der Funktionsposition in eine Stellung jenseits der Memory-Position, verschoben und dort verriegelt werden. Eine entsprechende Funktionalität ist selbstverständlich erfindungsgemäß bei sämtlichen anderen Komponenten, insbesondere in oder an einem Fahrzeug, beispielsweise einem Kraftfahrzeug, möglich und beispielsweise bei einer anderen Sitzeinstellungunsmöglichkeit als der Längsverstellung des Sitzes oder bei einer Einstellung des Lenkrads, des Schiebedaches, einer Kofferraumabdeckung oder dergleichen anwendbar.

### Bezugszeichenliste

- 1: Laberbolzen
- 2: Taumelherz
- 3: Zahnstange
- 4: Klinke/Arretierelement
- 5: Befestigungshebel
- 6: Antriebsrad
- 7: Steuerfeder
- 8: Gehäuse
- 9: Oberschiene
- 10: Unterschiene
- 11: Zählwerk
- 12: Kulisse
- 13: Innenverzahnung
- 14: erste Drehachse
- 15: Taumelritzel
- 16: zweite Drehachse
- 16a: Bewegungskreis des Taumelritzels
- 17: dritte Drehachse
- 18: Schwenkhebel
- 19: Klinkenverzahnung
- 20: Ende des Steuerelements
- 21: Ausnehmung der Sitzoberschiene
- 30: Vorrichtung

## Patentansprüche

1. Vorrichtung (30), umfassend einen Getriebemechanismus und ein Arretierelement (4), für ein Fahrzeug zur selbsttätigen Arretierung einer Komponente, insbesondere eines Fahrzeugsitzes, bei Erreichen einer zuvor eingenommenen und zwischenzeitlich zur Einnahme einer unterschiedlichen Funktionsposition verlassenen Einstellposition, wobei die Einstellposition auf einem Einstellbereich der Komponente änderbar vorgesehen ist, wobei die selbsttätige Arretierung der Komponente mittels des Getriebemechanismus und des Arretierelements (4) bewirkbar ist, **dadurch gekennzeichnet, dass**
- der Getriebemechanismus die Bewegung der Komponente aus ihrer Einstellposition in ihre Funktionsposition und zurück mittels einer variablen Übersetzung auf das Arretierelement (4) überträgt, wodurch eine unerschiedlich starke Steuerbewegung des Arretierelements bei gleicher Bewegung des Getriebemechanismus in unterschiedlichen Einstellpositionen des Getriebemechanismus erfolgt und
- ein Taumelmechanismus die variable Übersetzung bewirkt.

2. Vorrichtung (30) nach Anspruch 1, **dadurch gekennzeichnet, dass** in der Nähe der Einstellposition aufgrund der variablen Übersetzung eine vergleichsweise große Steuerbewegung des Arretierelements (4) bewirkbar ist und dass die Steuerbewegung des Arretierelements (4) ansonsten vergleichsweise klein ist.

3. Vorrichtung (30) nach einem der vorhergehenden Ansprüche, **dadurch gekennzeichnet, dass** das Arretierelement (4) mit dem Getriebemechanismus mittels einer Bolzen-Kulissen-Verbindung (2, 12) gekoppelt ist.

4. Vorrichtung (30) nach einem der vorhergehenden Ansprüche, **dadurch gekennzeichnet, dass** die Komponente ein Fahrzeugsitz ist.

5. Vorrichtung (30) nach einem der vorhergehenden Ansprüche, **dadurch gekennzeichnet, dass** dem Einstellbereich der Komponente eine Längsverschieblichkeit der Komponente, insbesondere in Richtung einer Fahrzeuglängsachse, entspricht.

6. Fahrzeugsitz mit einer Vorrichtung (30) nach einem der vorhergehenden Ansprüche.

## Claims

1. Device (30) comprising a transmission mechanism and a blocking element (4) for a vehicle for automatically blocking a component, in particular a vehicle seat, when a previously occupied adjusting position is reached and quitted, in the meantime, in order to occupy a different functional position, the adjusting position being provided to be able to be modified on an adjusting area of the component, wherein the automatic blocking of the component may be carried out by means of the transmission mechanism and the blocking element (4), **characterized in that**
- the transmission mechanism transfers the movement of the component from the adjusting position thereof to the functional position thereof and vice versa, to the blocking element (4) by means of a variable transmission, as a result of which a control movement of variable intensity of the blocking element takes place during the same movement of the transmission mechanism in various adjusting positions of the transmission mechanism, and
- a wobble mechanism carries out the variable transmission.

2. Device (30) according to Claim 1, **characterized in that** in the vicinity of the adjusting position, due to the variable transmission, a relatively large control movement of the blocking element (4) may be carried out and **in that** the control movement of the blocking element (4) is otherwise relatively small.

3. Device (30) according to one of the preceding claims, **characterized in that** the blocking element (4) is coupled to the transmission mechanism by means of a pin-slot-connection (2, 12).

4. Device (30) according to one of the preceding claims, **characterized in that** the component is a vehicle seat.

5. Device (30) according to one of the preceding claims, **characterized in that** a longitudinal displaceability of the component, in particular in the direction of a longitudinal axis of the vehicle, corresponds to the adjusting area of the component.

6. Vehicle seat with a device (30) according to one of the preceding claims.

## Revendications

1. Dispositif (30) comprenant un mécanisme de transmission et un élément de blocage (4), pour un véhicule, en vue de bloquer automatiquement un composant, notamment un siège de véhicule, une fois atteinte une position d'ajustement préalablement adoptée et quittée temporairement pour adopter une position fonctionnelle différente, dans lequel la position d'ajustement est prévue de manière variable sur une plage d'ajustement du composant, le blocage automatique du composant pouvant être effectué au moyen du mécanisme de transmission et de l'élément de blocage (4), **caractérisé en ce que**
- le mécanisme de transmission transmet le mouvement du composant de sa position d'ajustement dans sa position fonctionnelle et inversement à l'élément de blocage (4) au moyen d'une transmission variable, de sorte qu'un mouvement de commande d'intensité différente de l'élément de blocage ait lieu pour le même mouvement du mécanisme de transmission dans différentes positions d'ajustement du mécanisme de transmission, et
- la transmission variable est effectuée par un mécanisme de disque en nutation.

2. Dispositif (30) selon la revendication 1, **caractérisé en ce que** l'on peut effectuer un mouvement de commande relativement grand de l'élément de blocage (4) à proximité de la position d'ajustement du fait de la transmission variable, et **en ce que** le mouvement de commande de l'élément de blocage (4) est par ailleurs relativement petit.

3. Dispositif (30) selon l'une quelconque des revendications précédentes, **caractérisé en ce que** l'élément de blocage (4) est accouplé au mécanisme de transmission au moyen d'une connexion par boulon et coulisse (2, 12).

4. Dispositif (30) selon l'une quelconque des revendications précédentes, **caractérisé en ce que** le composant est un siège de véhicule.

5. Dispositif (30) selon l'une quelconque des revendications précédentes, **caractérisé en ce qu'**une mobilité longitudinale du composant, notamment dans la direction d'un axe longitudinal du véhicule, correspond à la plage d'ajustement du composant.

6. Siège de véhicule comprenant un dispositif (30) selon l'une quelconque des revendications précédentes.
